# EUROPÄISCHE PATENTSCHRIFT

(11) **EP 4 686 585 B1**
(45) Veröffentlichungstag und Bekanntmachung des Hinweises auf die Patenterteilung: **02.12.2026**
(21) Anmeldenummer: 25187484.8
(22) Anmeldetag: 04.07.2025
(51) Int. Cl.: B60C 23/04, B60C 29/00

(54) **SYSTEM MIT EINEM REIFENVENTIL UND EINER REIFENDRUCKÜBERWACHUNGSEINHEIT**
SYSTEM COMPRISING A TIRE VALVE AND A TIRE PRESSURE MONITORING UNIT
SYSTÈME COMPRENANT UNE VALVE DE PNEUMATIQUE ET UNE UNITÉ DE SURVEILLANCE DE LA PRESSION DES PNEUS

(30) Priorität: 31.07.2024 DE 102024121796
(43) Veröffentlichungstag der Anmeldung: 04.02.2026
(73) Patentinhaber: Huf Baolong Electronics Bretten GmbH, 75015 Bretten (DE)
(72) Erfinder: Savchuk, Maximilian, 75181 Pforzheim (DE); Seifert, André, 75181 Pforzheim (DE); Arnoldo, Sven, 76316 Malsch (DE); Gamer, Benedikt, 75045 Walzbachtal (DE)
(74) Vertreter: Twelmeier Mommer & Partner

(56) Entgegenhaltungen:
- EP-A1- 4 311 696
- WO-A1-2011/097823
- CN-A- 102 259 566
- DE-A1- 102015 114 102
- DE-U1- 20 110 716
- GB-A- 2 594 991

## Beschreibung

Die Erfindung betrifft ein System mit einem Reifenventil und einer Reifendrucküberwachungseinheit. Ein System mit den im Oberbegriff des Anspruchs 1 angegebenen Merkmalen ist beispielsweise aus EP 4 311 696 A1 bekannt.

Bei dem aus EP 4 311 696 A1 bekannten Reifenventil bildet der Ventilschaft einen T-förmigen Spannkopf, der in einer ersten Drehwinkelstellung durch eine Öffnung der Reifendrucküberwachungseinheit gesteckt werden kann und in einer zweiten Drehwinkelstellung einen Anschlag bildet, gegen den die Reifendrucküberwachungseinheit im montierten Zustand von einem Träger gedrückt wird.

Im Betrieb sind Reifendrucküberwachungseinheiten sehr großen Beschleunigungskräften unterworfen, die bei großer Fahrtgeschwindigkeit dazu führen können, dass sich die Reifendrucküberwachungseinheit von dem Träger abhebt. Ein solches "Lifting" lässt sich grundsätzlich durch eine größere Spannfläche, d.h. einen größeren Spannkopf, verhindern. Eine größerer Spannkopf macht bei dem aus EP 4 311 696 A1 bekannten System aber eine entsprechend größere Reifendrucküberwachungseinheit erforderlich, da die schlitzförmige Öffnung der Reifendrucküberwachungseinheit, durch welche der T-förmige Spannkopf gesteckt wird, entweder verlängert oder verbreitert werden muss.

Aufgabe der vorliegenden Erfindung ist es, einen Weg aufzuzeigen, wie bei einem System der eingangs genannten Art mit einer kompakten Reifendrucküberwachungseinheit ein Abheben des Reifendrucküberwachungseinheit von dem Träger auch bei großen Beschleunigungen besser verhindert werden kann.

Diese Aufgabe wird durch ein System mit den im Oberbegriff des Anspruchs 1 angegebenen Merkmalen sowie durch ein Verfahren gemäß Anspruch 6 gelöst. Vorteilhafte Weiterbildungen der Erfindung sind Gegenstand von Unteransprüchen.

Bei einem erfindungsgemäßen System hat das Reifenventil ein mit dem Ventilschaft verschraubtes Spannelement, um die Reifendrucküberwachungseinheit zwischen dem Spannelement und einem Träger der Reifendrucküberwachungseinheit einzuspannen. Das Spannelement hat einen Abschnitt, der durch Formschluss eine Drehbewegung des Spannelements um seine Längsachse relativ zu der Reifendrucküberwachungseinheit verhindert. Das Spannelement kann als eine Schraube ausgeführt sein, die in ein Innengewinde des Ventilschafts eingreift, oder ein Innengewinde aufweisen, das mit einem Außengewinde des Ventilschafts zusammenwirkt.

Da der Kopf eines erfindungsgemäßen Spannelements nicht durch die Öffnung der Reifendrucküberwachungseinheit gesteckt wird, kann er nahezu beliebig vergrößert werden, ohne dass die Öffnung der Reifendrucküberwachungseinheit vergrößert werden müsse. Vorteilhaft kann so bei einem vormontierbaren System mit einer kompakten Reifendrucküberwachungseinheit die Spannfläche vergrößert und einem "lifting" entgegengewirkt werden.

Zur Vormontage des erfindungsgemäßen Systems wird das Spannelement in eine durchgehende Öffnung der Reifendrucküberwachungseinheit gesteckt und dann mit dem Ventilschaft verschraubt. Der Träger und eine Dichtung können vor oder nach der Verschraubung von Spannelement und Ventilschaft auf den Ventilschaft gesteckt werden. Auf diese Weise kann ein unbeabsichtigtes Lösen der Reifendrucküberwachungseinheit im vormontierten Zustand durch beim Transport auftretenden Bewegungen weitestgehend ausgeschlossen werden. Insbesondere kann die Verschraubung des Spannelements mit dem Ventilschaft im vormontierten Zustand durch Schraubensicherungslack gesichert werden.

Bevorzugt wird bei der Vormontage das Spannelement bereits fest mit dem Ventilschaft verschraubt. Dies bedeutet, dass die Verschraubung nur mit einem Werkzeug wieder gelöst werden kann. Dies kann beispielweise erreicht werden, indem beim Verschrauben ein Drehmoment von 0,8 Newtonmeter oder mehr verwendet wird

Zur Montage des vormontierten Systems an einer Felge wird dann der Ventilschaft des Reifenventils von der Innenseite der Felge her durch eine Felgenbohrung gesteckt. Dann wird durch Anziehen einer Mutter, die von der Außenseite der Felge auf ein Außengewinde des Ventilschafts aufgeschraubt wird, der Ventilschaft soweit durch die Felgenbohrung gezogen, bis eine Unterseite des Trägers, beispielsweise mit einer Dichtung, an der Felge anliegt und die Reifendrucküberwachungseinheit zwischen einer Oberseite des Trägers und dem Kopf des Spannelements eingespannt ist.

Der Formschluss zwischen Reifendrucküberwachungseinheit und Spannelement wird durch einen Abschnitt des Spannelements bewirkt, der in einer Öffnung oder Aussparung der Reifendrucküberwachungseinheit sitzt. Beispielsweise kann der Kopf des Spannelements eine von der Kreisform abweichende Kontur haben, z.B. rechteckig sein, und an Begrenzungsflächen einer Aussparung der Reifendrucküberwachungseinheit anliegen. Eine andere Möglichkeit besteht beispielsweise darin, dass ein Abschnitt des Spannelements zwischen dem Außengewinde und seinem Kopf einen von der Kreisform abweichenden Querschnitt hat, beispielsweise rechteckig ist, und sich deshalb in einer Öffnung der Reifendrucküberwachungseinrichtung, durch welche die Spannschraube hindurchragt, nicht drehen kann.

Eine vorteilhafte Weiterbildung der Erfindung sieht vor, dass der Ventilschaft eine Schlüsselfläche aufweist, über die mit einem Werkzeug ein Drehmoment auf den Ventilschaft ausgeübt werden kann. Die Schlüsselfläche kann beispielsweise als ein Sechskant ausgebildet sein, an den ein Schraubenschlüssel angesetzt werden kann. Auf diese Weise lässt sich das Einleiten eines Drehmoments zum Verschrauben des Spannelements mit dem Ventilschaft erleichtern. Die Schraubverbindung zwischen Spannelement und Ventilschaft kann mit einem Werkzeug problemlos gelöst werden. Eine Demontage ist mit einem erfindungsgemäßen System also ohne größeren Aufwand möglich.

Die beiden Gewinde des Ventilschafts können als Rechts- oder Linksgewinde ausgeführt sein. Bevorzugt haben beide Gewinde denselben Drehsinn.

Eine weitere vorteilhafte Weiterbildung der Erfindung sieht vor, dass eine dem Spannelement zugewandte Stirnseite des Ventilschafts trichterförmig ist. Auf diese Weise kann das Einführen des Spannelements in den Ventilschaft erleichtert werden, insbesondere wenn das Spannelement eine dazu komplementäre Fläche hat. Wenn das Spannelement ein Innengewinde hat, kann es dementsprechend vorteilhaft sein, wenn sich der Ventilschaft zu seinem Ende hin verjüngt und das Spannelement einen trichterförmigen Abschnitt aufweist, um das Einführen des Ventilschafts in das Spannelement zu erleichtern.

Weitere Einzelheiten und Vorteile der Erfindung werden an Ausführungsbeispielen unter Bezugnahme auf die beigefügten Zeichnungen erläutert. Gleiche und einander entsprechende Komponenten sind in den Zeichnungen mit übereinstimmenden Bezugszahlen versehen. Es zeigen:
- Fig. 1: eine schematische Darstellung eines erfindungsgemäßen Systems;
- Fig. 2: ein Ausführungsbeispiel eines erfindungsgemäßen Systems;
- Fig. 3: eine Explosionsdarstellung zu Fig. 2; und
- Fig. 4: eine weitere Explosionsdarstellung zu Fig. 2.

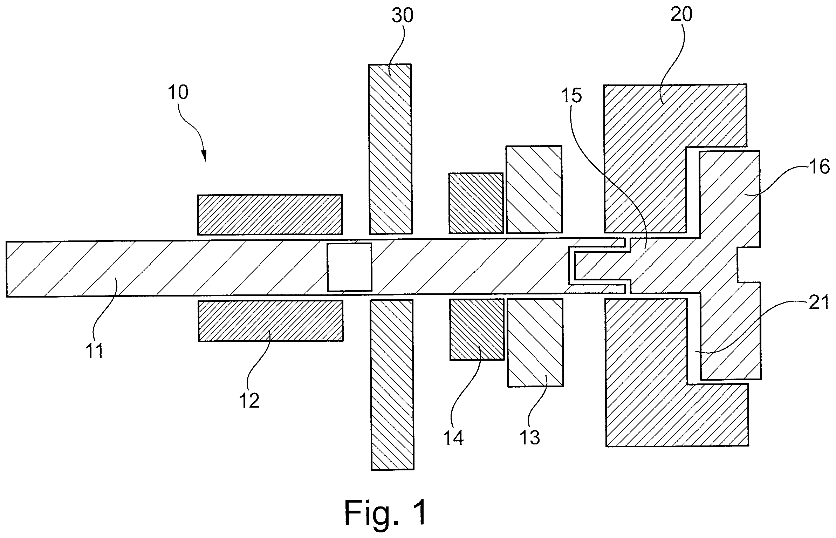

In Fig. 1 ist schematisch ein System mit einem Reifenventil 10 und einer Reifendrucküberwachungseinheit 20 zusammen mit einer Felge 30 dargestellt. Das Reifenventil 10 hat einen Ventilschaft 11, der im montierten Zustand durch eine Bohrung der Felge 30 hindurch ragt und ein Außengewinde aufweist, auf dem eine dazu passende Mutter 12 sitzt. Auf den Ventilschaft 11 ist ein Träger 13 für die Reifendrucküberwachungseinheit 20 aufgesteckt, an dessen Unterseite eine Dichtung 14 angeordnet ist. Der Ventilschaft 11 hat ein zweites Gewinde, das mit einem Spannelement 15 zusammenwirkt. Bei dem gezeigten Ausführungsbeispiel ist das zweite Gewinde des Ventilschafts 11 ein Innengewinde und das Spannelement 15 eine Schraube. Alternativ kann aber auch das Spannelement 15 mit einem Innengewinde versehen sein und das zweite Gewinde des Ventilschafts 11 als ein dazu passendes Außengewinde ausgebildet sein.

Durch Aufschrauben des Ventilschafts 11 auf das Spannelement 15 wird die Reifendrucküberwachungseinheit 20 zwischen dem Träger 13 und dem Kopf 16 des Spannelements 15 vormontiert. Der Ventilschaft 11 hat dazu eine Schlüsselfläche, z.B. eine Sechskantfläche, über die mit einem Werkzeug, etwa einem Schraubenschlüssel, zur Verschraubung mit dem Spannelement 15 ein Drehmoment auf den Ventilschaft 11 ausgeübt werden kann. Durch Anziehen der Mutter 12 wird dann der Ventilschaft 11 aus der Felgenbohrung herausgezogen, so dass die Dichtung 14 an der Unterseite des Trägers 13 gegen die Felge 30 gepresst wird.

Bei dem dargestellten System sind der Träger 13 und die Dichtung 14 vor der Montage in Längsrichtung des Ventilschafts 11 relativ zu dem Ventilschaft 11 beweglich. Der Träger 13 ist somit ein separates Bauteil und kann kostengünstig hergestellt werden, beispielsweise aus Kunststoff. Die auf den Ventilschaft 11 aufgesteckte Reifendrucküberwachungseinheit 20, die einen Drucksensor und einen Sender zum drahtlosen Übertragen von Druckdaten, aufweist, ist ebenfalls relativ zu dem Ventilschaft 11 beweglich, bis sie im fertig montierten Zustand zwischen dem Träger 13 und dem Spannelement 15, genauer gesagt dem Kopf 16 des Spannelements 15, eingespannt ist.

Schon im vormontierten Zustand, in dem der Ventilschaft 11 mit dem Spannelement 15 verschraubt ist, verhindert ein Formschluss eine Drehbewegung des Spannelements 15 um seine Längsachse relativ zu der Reifendrucküberwachungseinheit 20. Ein solcher Formschluss kann beispielsweise durch einen Abschnitt des Spannelements 15 bewirkt werden, der eine von der Kreisform abweichende Kontur hat, etwa ein rechteckiger Kopf 16 des Spannelements 15, der in einer passenden Aussparung der Reifendrucküberwachungseinheit 20 sitzt. Weitere Möglichkeiten sind eine konturierte Unterseite des Kopfs 16 des Spannelements 15, die eine Verzahnung mit einer Anlagefläche 21 der Reifendrucküberwachungseinheit 20 bewirkt, sowie ein Abschnitt des Spannelements 15, der einen kantigen Querschnitt hat und in einer Öffnung der Reifendrucküberwachungseinheit 20 sitzt, beispielsweise zwischen Außengewinde und Kopf 16. Der Kopf 16 kann an seiner Unterseite Rillen aufweisen oder auf andere Weise konturiert sein. Die Gewindeverbindung zwischen Ventilschaft 11 und Spannelement 15 kann durch einen Schraubensicherungslack gesichert werden.

Das Spannelement 15 und der Ventilschaft 11 haben einen nicht-dargestellten Kanal für den Durchlass von Luft.

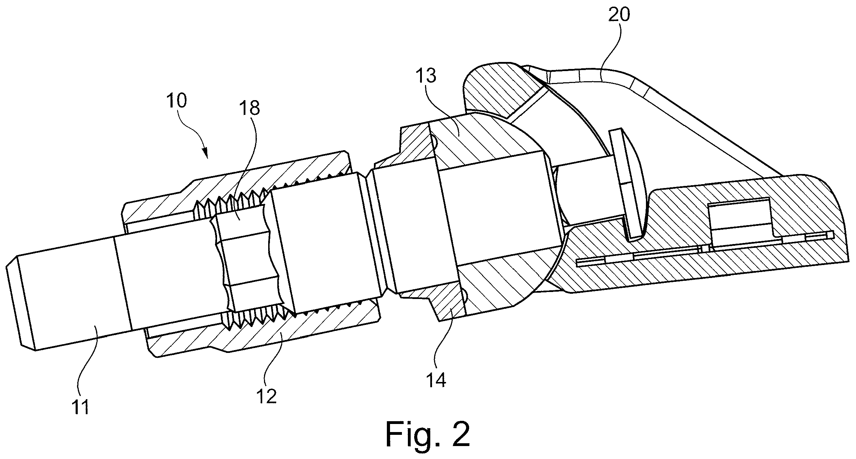

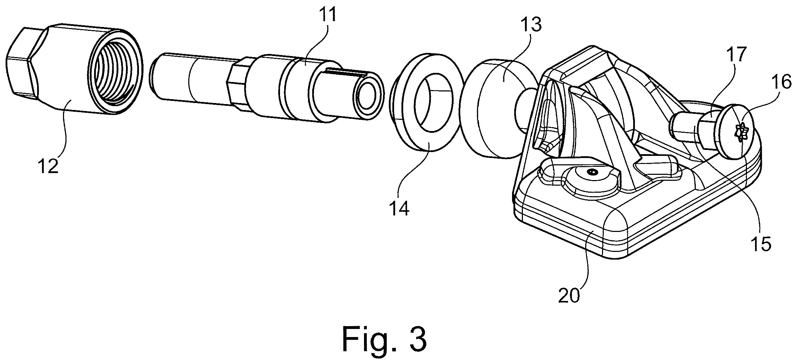

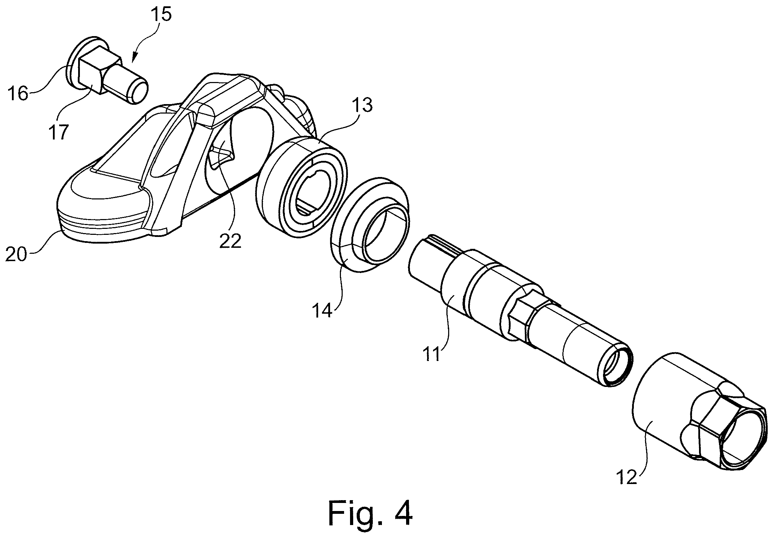

In den Figuren 2 bis 4 ist ein detaillierteres Ausführungsbeispiel eines erfindungsgemäßen Systems dargestellt. Fig. 2 zeigt dabei den montierten Zustand des Systems, allerdings ohne Felge, die im montierten Zustand zwischen der Mutter 12 und der Dichtung 14 an der Unterseite des Trägers 13 angeordnet ist und deren Felgenbohrung dann durch die angepresste Dichtung 14 abgedichtet wird.

Der Träger 13 hat an seiner Oberseite eine kalottenförmige Wölbung, die in eine dazu passende Einbuchtung an einer Unterseite der Reifendrucküberwachungseinheit 20 passt. Das Spannelement 15 wird mit seinem Außengewinde durch einen Schlitz 22 der Reifendrucküberwachungseinheit 20 gesteckt und greift in ein Innengewinde des Ventilschafts 11 ein. Dieser Schlitz 22 ermöglicht zusammen mit der kalottenförmige Wölbung des Trägers 13 ein Verschwenken der Reifendrucküberwachungseinheit 20 zur Anpassung an die spezielle Geometrie des Felgenbetts einer gegebenen Felge. Die Schwenkbewegung der Reifendrucküberwachungseinheit 20 ermöglicht es, dass sich die Reifendrucküberwachungseinheit 20 unabhängig von der Tiefe eines gegebenen Felgenbetts an dem Boden der Felge abstützen kann.

Das Spannelement 15 hat einen Abschnitt 17, der durch Formschluss mit der Reifendrucküberwachungseinheit 20 eine Drehbewegung des Spannelements 15 um die Längsachse des Spannelements 15 relativ zu der Reifendrucküberwachungseinheit 20 verhindert. Um das Verschrauben von Ventilschaft 11 und Spannelement 15 zu erleichtern, kann deshalb der Ventilschaft mit einer Schlüsselfläche 18 versehen sein, z.B. eine Sechskantfläche, über die mit einem Werkzeug, etwa einem Schraubenschlüssel, zur Verschraubung mit dem Spannelement 15 ein Drehmoment auf den Ventilschaft 11 ausgeübt werden kann. Zusätzlich kann der Kopf 16 des Spannelements 15 eine Schlüsselfläche haben, etwa einen Schlitz für einen Schraubenzieher.

Im vormontierten Zustand des dargestellten Systems ist der Ventilschaft 11 auf das Spannelement 15 aufgeschraubt. In diesem vormontierten Zustand sind der Träger 14 und die Reifendrucküberwachungseinheit 20 in Längsrichtung des Ventilschafts 11 noch beweglich. Allerdings ist eine solche Bewegung durch die an der Unterseite des Trägers 13 befestigte Dichtung 14 erschwert, das vormontierte System ist deshalb so stabil, dass zufällige Bewegungen oder Erschütterungen beim Transport keine Probleme bereiten und insbesondere nicht zu einem Lösen des Spannelements 15 führen.

Zur Endmontage wird der Ventilschaft 11 des Reifenventils 10 von der Innenseite der Felge durch die Felgenbohrung gesteckt und anschließend die Reifendrucküberwachungseinheit 20 zur Anpassung an eine gegebene Felgenbetttiefe verschwenkt. Danach wird die Mutter 12 an der Außenseite des Ventilschafts 11 angezogen. Dabei wird der Ventilschaft 11 weiter aus der Felgenbohrung herausgezogen und die Dichtung 14 zwischen Träger 13 und Felge verpresst und die Reifendrucküberwachungseinheit 20 zwischen dem Träger 13 und dem Spannkopf des Spannelements 15 eingespannt.

### Bezugszeichenliste

- 10: Reifenventil
- 11: Ventilschaft
- 12: Mutter
- 13: Träger
- 14: Dichtung
- 15: Spannelement
- 16: Spannkopf
- 17: Abschnitt des Spannelements
- 18: Schlüsselfläche
- 20: Reifendrucküberwachungseinheit
- 21: Anlagefläche
- 22: Schlitz
- 30: Felge

## Patentansprüche

1. System mit
einem Reifenventil (10) für einen Luftreifen eines Fahrzeugs, und
einer Reifendrucküberwachungseinheit (20), die einen Drucksensor und einen Sender zum drahtlosen Übertragen von Druckdaten aufweist,
wobei das Reifenventil (10)
einen Ventilschaft (11) mit einem Außengewinde,
eine zu dem Außengewinde passende Mutter (12), und
einen in Längsrichtung des Ventilschafts (11) verschiebbaren Träger (13) für die Reifendrucküberwachungseinheit (20) aufweist,
**dadurch gekennzeichnet, dass**
das Reifenventil (10) ein Spannelement (15) aufweist, um die Reifendrucküberwachungseinheit (20) zwischen dem Spannelement (15) und dem Träger (13) einzuspannen,
der Ventilschaft (11) ein zweites Gewinde aufweist, das zu einem Gewinde des Spannelements (15) passt, und
das Spannelement (15) einen Abschnitt (16, 17) aufweist, der durch Formschluss eine Drehbewegung des Spannelements (15) um seine Längsachse relativ zu der Reifendrucküberwachungseinheit (20) verhindert.

2. Reifenventil nach Anspruch 1, **dadurch gekennzeichnet, dass** das zweite Gewinde des Ventilschafts (11) ein Innengewinde ist und das Spannelement (15) eine Schraube ist.

3. Reifenventil nach einem der vorstehenden Ansprüche, **dadurch gekennzeichnet, dass** das Spannelement (15) einen Kopf (16) aufweist, der eine konturierte Unterseite aufweist.

4. Reifenventil nach einem der vorstehenden Ansprüche, **dadurch gekennzeichnet, dass** der Ventilschaft (11) eine Schlüsselfläche (18) für ein Werkzeug zum Einleiten eines Drehmoments aufweist.

5. Reifenventil nach einem der vorstehenden Ansprüche, **dadurch gekennzeichnet, dass** eine dem Spannelement (15) zugewandte Stirnseite des Ventilschafts (11) sich verjüngt oder trichterförmig ist.

6. Verfahren zum Montieren einer Reifendrucküberwachungseinheit (20) an einer Felge (30), wobei
ein Träger (13) für eine Reifendrucküberwachungseinheit (20) auf einen Ventilschaft (11) eines Reifenventils (10) gesteckt wird,
ein Spannelement (15) durch eine Öffnung der Reifendrucküberwachungseinheit (20) hindurchgeführt und mit dem Ventilschaft (11) verschraubt wird, während durch einen Formschluss zwischen der Reifendrucküberwachungseinheit (20) und einem Abschnitt (16, 17) des Spannelements (15) eine Drehbewegung des Spannelements (15) um seine Längsachse relativ zu der Reifendrucküberwachungseinheit (20) verhindert wird, und
das Reifenventil (10) in eine Felgenbohrung gesteckt wird,
und nach den vorstehend genannten Schritten
eine Mutter (12) auf den Ventilschaft (11) aufgeschraubt und so der Ventilschaft (11) soweit aus der Felgenbohrung gezogen wird, bis eine an einer Unterseite des Trägers (13) angeordnete Dichtung (14) an eine Innenseite der Felge (30) gepresst ist.

7. Verfahren nach Anspruch 6, **dadurch gekennzeichnet, dass** das Reifenventil (10) erst in die Felgenbohrung gesteckt wird, wenn das Spannelement (15) mit dem Ventilschaft (11) verschraubt ist.

8. Verfahren nach Anspruch 7, **dadurch gekennzeichnet, dass** zum Verschrauben des Spannelements (15) mit dem Ventilschaft ein Drehmoment von mindestens 0,8 N·m ausgeübt wird, bevor das Reifenventil (10) in die Felgenbohrung gesteckt wird

9. Verfahren nach Anspruch 7 oder 8, **dadurch gekennzeichnet, dass** die Reifendrucküberwachungseinheit (20) zwischen Spannelement (15) und Träger (13) eingespannt wird, nachdem das Reifenventil (10) in die Felgenbohrung gesteckt wurde.

10. Verfahren nach Anspruch 9, **dadurch gekennzeichnet, dass** die Reifendrucküberwachungseinheit (20) zwischen einem Kopf (16) des Spannelements (15) und dem Träger (13) eingespannt wird, indem die Mutter (12) auf dem Ventilschaft (11) festgezogen wird.

## Claims

1. A system comprising
a tyre valve (10) for a pneumatic tyre of a vehicle, and
a tyre pressure monitoring unit (20) comprising a pressure sensor and a transmitter for wirelessly transmitting pressure data,
wherein the tyre valve (10) comprises
a valve stem (11) with an external thread,
a nut (12) matching the external thread, and
a carrier (13) for the tyre pressure monitoring unit (20), **characterised in that** the tyre valve (10) comprises a clamping element (15) for clamping the tyre pressure monitoring unit (20) between the clamping element (15) and the carrier (13),
the valve stem (11) comprises a second thread which matches a thread on the clamping element (15), and
the clamping element (15) comprises a section (16, 17) which, by positive locking, prevents rotational movement of the clamping element (15) about its longitudinal axis relative to the tyre pressure monitoring unit (20).

2. A tyre valve according to claim 1, **characterised in that** the second thread of the valve stem (11) is an internal thread and the clamping element (15) is a screw.

3. A tyre valve according to one of the preceding claims, **characterised in that** the clamping element (15) comprises a head (16) having a contoured underside.

4. A tyre valve according to any one of the preceding claims, **characterised in that** the valve stem (11) comprises a keyway (18) for a tool for applying torque.

5. A tyre valve according to any one of the preceding claims, **characterised in that** an end face of the valve stem (11) facing the clamping element (15) is tapered or funnel-shaped.

6. A method for mounting a tyre pressure monitoring unit (20) on a rim (30), wherein
a carrier (13) for a tyre pressure monitoring unit (20) is fitted onto a valve stem (11) of a tyre valve (10),
a clamping element (15) is passed through an opening in the tyre pressure monitoring unit (20) and screwed onto the valve stem (11), whilst a positive fit between the tyre pressure monitoring unit (20) and a section (16, 17) of the clamping element (15) prevents the clamping element (15) from rotating about its longitudinal axis relative to the tyre pressure monitoring unit (20), and
the tyre valve (10) is inserted into a rim bore,
and following the aforementioned steps
a nut (12) is screwed onto the valve stem (11), thereby pulling the valve stem (11) out of the rim bore until a seal (14) arranged on an underside of the carrier (13) is pressed against an inner surface of the rim (30).

7. A method according to claim 6, **characterised in that** the tyre valve (10) is inserted into the rim bore only once the clamping element (15) has been screwed onto the valve stem (11).

8. A method according to claim 7, **characterised in that**, in order to screw the clamping element (15) to the valve stem, a torque of at least 0.8 N·m is applied before the tyre valve (10) is inserted into the rim bore.

9. A method according to claim 7 or 8, **characterised in that** the tyre pressure monitoring unit (20) is clamped between the clamping element (15) and the carrier (13) after the tyre valve (10) has been inserted into the rim bore.

10. A method according to claim 9, **characterised in that** the tyre pressure monitoring unit (20) is clamped between a head (16) of the clamping element (15) and the support (13) by tightening the nut (12) on the valve stem (11).

## Revendications

1. Système comprenant
une valve de pneu (10) destinée au pneu gonflable d'un véhicule, et
une unité de surveillance de pression de pneu (20) qui comprend un capteur de pression et un émetteur destiné à transmettre sans fil des données de pression, la valve de pneu (10) comporte
une tige de valve (11) comprenant un filetage extérieur,
un écrou (12) conçu pour le filetage extérieur, et
un support (13) pouvant coulisser dans le sens longitudinal de la tige de valve (11) et destiné à recevoir l'unité de surveillance de pression de pneu (20), **caractérisée en ce que**
la valve de pneu (10) comporte un élément de serrage (15) destiné à serrer l'unité de surveillance de pression de pneu (20) entre l'élément de serrage (15) et le support (13),
la tige de valve (11) comporte un second filetage qui est adapté à un filetage de l'élément de serrage (15), et
l'élément de serrage (15) comporte une partie (16, 17) qui, par complémentarité de forme, empêche un mouvement de rotation de l'élément de serrage (15) autour de son axe longitudinal par rapport à l'unité de surveillance de pression de pneu (20).

2. Valve de pneu selon la revendication 1, **caractérisée en ce que** le second filetage de la tige de valve (11) est un filetage intérieur et l'élément de serrage (15) est une vis.

3. Valve de pneu selon l'une des revendications précédentes, **caractérisée en ce que** l'élément de serrage (15) comporte une tête (16) présentant une face inférieure profilée.

4. Valve de pneu selon l'une des revendications précédentes, **caractérisée en ce que** la tige de valve (11) comporte une surface de clé (18) destinée à un outil permettant d'appliquer un moment de torsion.

5. Valve de pneu selon l'une des revendications précédentes, **caractérisée en ce qu'**une face frontale de la tige de valve (11), tournée vers l'élément de serrage (15), s'est effilée ou est en forme d'entonnoir.

6. Procédé de montage d'une unité de surveillance de pression de pneu (20) sur une jante (30), dans lequel
un support (13) pour une unité de surveillance de pression de pneu (20) est emboîté sur une tige de valve (11) d'une valve de pneu (10),
un élément de serrage (15) est guidé à travers une ouverture de l'unité de surveillance de pression de pneu (20) et vissé à la tige de valve (11), tandis qu'une liaison par complémentarité de forme entre l'unité de surveillance de pression de pneu (20) et une partie (16, 17) de l'élément de serrage (15) empêche tout mouvement de rotation de l'élément de serrage (15) autour de son axe longitudinal par rapport à l'unité de surveillance de pression de pneu (20), et la valve de pneu (10) est insérée dans un alésage de jante, et, après les étapes susmentionnées,
un écrou (12) est vissé sur la tige de valve (11), ce qui permet de retirer la tige de valve (11) de l'alésage de la jante jusqu'à ce qu'un joint d'étanchéité (14), disposé sur une face inférieure du support (13), soit pressé contre une face intérieure de la jante (30).

7. Procédé selon la revendication 6, **caractérisé en ce que** la valve de pneu (10) n'est insérée dans l'alésage de la jante que lorsque l'élément de serrage (15) est vissé à la tige de valve (11) .

8. Procédé selon la revendication 7, **caractérisé en ce que**, pour visser l'élément de serrage (15) sur la tige de valve, un moment de torsion d'au moins 0,8 N·m est appliqué avant que la valve de pneu (10) ne soit insérée dans l'alésage de la jante.

9. Procédé selon les revendications 7 ou 8, **caractérisé en ce que** l'unité de surveillance de pression de pneu (20) est serrée entre l'élément de serrage (15) et le support (13) après que la valve de pneu (10) a été insérée dans l'alésage de la jante.

10. Procédé selon la revendication 9, **caractérisé en ce que** l'unité de surveillance de pression de pneu (20) est serrée entre une tête (16) de l'élément de serrage (15) et le support (13) en serrant l'écrou (12) sur la tige de valve (11).
